# EUROPEAN PATENT APPLICATION

(11) **EP 2 091 236 A2**
(43) Date of publication of application: **19.08.2009**
(21) Application number: 09000456.5
(22) Date of filing: 14.01.2009
(51) Int. Cl.: H04N 5/232

(54) **Television camera system**

(30) Priority: 13.02.2008 JP 2008031735
(71) Applicant: Fujinon Corporation, Saitama-shi, Saitama (JP)
(72) Inventor: Moriya, Chikatsu, Saitama-shi Saitama (JP)
(74) Representative: Höhfeld, Jochen

(57) **Abstract**

A television camera system is provided and includes: a television camera main body; a lens device; and a monitor. Focus information obtained by an auto-focusing function of the lens device can be displayed on the monitor via the television camera main body. In a case where a controller including a display instruction unit that instructs whether the focus information is to be displayed on the monitor is coupled to the lens device, the lens device determines whether the focus information is to be displayed on the monitor in accordance with an instruction from the display instruction unit, and in a case where the controller is not coupled to the lens device, the lens device determines that the focus information is to be displayed on the monitor.

## Description

This application is based on and claims priority under 35 U.S.C §119 from Japanese Patent Application No. 2008-031735, filed on February 13, 2008, the entire disclosure of which is herein incorporated by reference.

### BACKGROUND OF THE INVENTION

### 1. Field of the Invention

The present invention relates to a television camera system and, in particular, relates to a television camera system which includes a television camera main body (camera device) and a television lens system (lens device) attached to the camera main body, wherein the lens device has an auto-focusing function and the television camera system has a function of displaying focus information obtained from the auto-focusing function on the view finder of the camera main body.

### 2. Description of Related Art

In general, a television camera for business use or broadcasting use is configured in a manner that a lens device having an imaging optical system (imaging lens system) is mounted with respect to a camera main body so as to be detachable. In such the television camera, a lens device has been known which has an auto-focusing (AF) function for performing the automatic focusing. For example, there has been known a lens device which receives a video signal obtained by imaging a subject from a camera main body and performs the auto-focusing processing of the well-known contrast method based on the video signal to thereby place the imaging optical system in a focused state.

The camera main body is provided with a monitor (view finder) for displaying a real-time image being taken thereon. When the AF function is mounted on the lens device, the lens device is arranged in a manner that the lens device outputs, to the camera main body in accordance with an instruction from a controller (focusing controller etc.) coupled to the lens device, information relating to the current focus state (front focus, rear focus or in-focus) obtained from the AF function and information relating to an AF area used in the AF function, whereby the camera main body processes these information to display these information on the view finder so as to be superimposed on an image of a subject (see JP-A-2002-365710, for example). Information relating to the focusing such as the information relating to the focus state and the information relating to the AF area is called as focus information in this specification.

When a user operates VF display instruction unit (VF display instruction switch) provided at a predetermined controller (focusing controller etc.) coupled to the lens device, the lens device determines in accordance with a setting state of the VF display instruction unit as to whether or not the focus information obtained by the AF function mounted on the lens device as described above is to be displayed on the view finder. However, there is a controller which does not include the VF display instruction unit. In this case, since a signal representing the setting state of the VF display instruction unit is not applied to the lens device, the lens device determines that the focus information is not to be displayed on the view finder. Thus, in the case where a controller having the VF display instruction unit is not used, since the focus information is not displayed on the view finder, there arise a problem that the focus information can not be grasped even in a case where the focus information is desired to be grasped

### SUMMARY OF THE INVENTION

An object of an illustrative, non-limiting embodiment of the invention is to provide a television camera system which can display focus information obtained from the AF function of a lens device on a view finder (monitor) even in a case where a controller including VF display instruction unit is not coupled to the lens device.

According to an aspect of the invention, there is provided a television camera system including:
a television camera main body that includes an imaging device which converts a subject image formed on an image forming plane into an electric signal;
a lens device that includes an optical system which forms the subject image on the image forming plane and that has an auto-focusing function for automatically adjusting a focal point of the optical system; and
a monitor that displays an image signal outputted from the television camera main body,
wherein focus information obtained by the auto-focusing function of the lens device can be displayed on the monitor via the television camera main body, and
wherein
in a case where a controller including a display instruction unit that instructs whether the focus information is to be displayed on the monitor is coupled to the lens device, the lens device determines whether the focus information is to be displayed on the monitor in accordance with an instruction from the display instruction unit, and
in a case where the controller is not coupled to the lens device, the lens device determines that the focus information is to be displayed on the monitor.

According to an aspect of the invention, the focus information can be displayed on the monitor even in a case where the controller including the display instruction unit for instructing whether or not the focus information is to be displayed on the monitor is not coupled to the lens device.

According to an aspect of the invention, there is provided a television camera system including:
a television camera main body that includes an imaging device which converts a subject image formed on an image forming plane into an electric signal;
a lens device that includes an optical system which forms the subject image on the image forming plane and that has an auto-focusing function for automatically adjusting a focal point of the optical system; and
a monitor that displays an image signal outputted from the television camera main body,
wherein focus information obtained by the auto-focusing function of the lens device can be displayed on the monitor via the television camera main body,
wherein one of the lens device and the television camera main body includes a first display instruction unit that instructs whether the focus information is to be displayed on the monitor, and
wherein
in a case where a controller including a second display instruction unit that instructs whether the focus information is to be displayed on the monitor is coupled to the lens device, the lens device determines whether the focus information is to be displayed on the monitor in accordance with an instruction from the second display instruction unit, and in a case where the controller is not coupled to the lens device, it is determined whether the focus information is to be displayed on the monitor according to an instruction from the first display instruction unit.

According to an aspect of the invention, even in the case where the controller including the display instruction unit for instructing whether or not the focus information is to be displayed on the monitor is not coupled to the lens device, a user can arbitrarily select as to whether or not the focus information is to be displayed on the monitor according to the other display instruction unit provided at the lens device or the television camera main body. Further, in the case where the controller including the display instruction unit is coupled to the lens device, the setting of the display instruction unit of the controller is given priority, and so it is determined whether or not the focus information is to be displayed on the monitor according to the setting of the display instruction unit of the controller.

The television camera system may be configured in a manner that the focus information includes at least one of information representing focus information of the optical system and information of an AF (auto-focus) area representing an area of a subject on which the auto-focusing function is focused.

The concrete information contents of the focus information to be displayed on the monitor can be limited to focus information of the optical system or information on the AF area.

### BRIEF DESCRIPTION OF THE DRAWINGS

The features of the invention will appear more fully upon consideration of the exemplary embodiment of the invention, which are schematically set forth in the drawings, in which:
Fig. 1 is an external side view showing a configuration of a television camera system according to an exemplary embodiment of the invention;
Fig. 2 is a diagram showing an example of the display mode of focus information displayed on a view finder;
Fig. 3 is a flowchart showing a case of employing a first example as to the processing for turning on/off the display of the focus information on the view finder, performed by the lens controlling of the lens device; and
Fig. 4 is a flowchart showing a case of employing a second example as to the processing for turning on/off the display of the focus information on the view finder, performed by the lens controlling of the lens device.

### DETAILED DESCRIPTION OF THE EXEMPLARY EMBODIMENTS

In a television camera system according to an exemplary embodiment of the invention, even in the case where the controller having the VF display instruction unit is not coupled to the lens device, the focus information obtained from the AF function of the lens device can be displayed on a view finder (monitor).

Hereinafter, a television camera system for broadcasting use or business use according to an exemplary embodiment of the invention will be explained with reference to attached drawings.

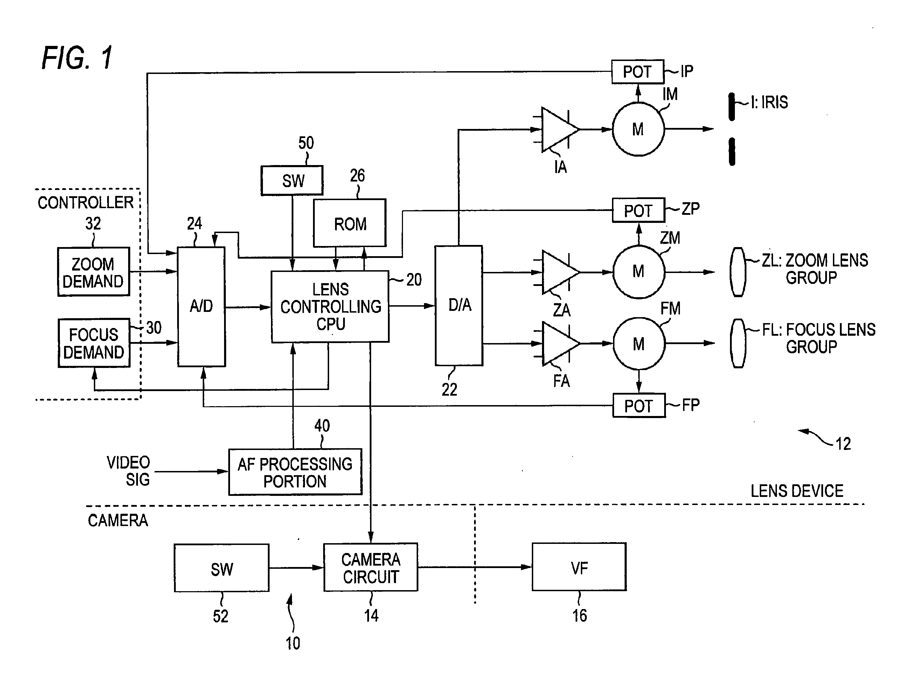

Fig. 1 is a block diagram showing a configuration of a television camera system for broadcasting use or business use according to an exemplary embodiment of the invention. The television camera system shown in Fig. 1 mainly includes a television body 10 (hereinafter called the body 10), a lens device 12 and a view finder (monitor) 16. The lens device 12 is attached to the body 10 so as to be detachable.

The body 10 mounts thereon an imaging device (not shown) that converts an image of a subject formed by the optical system of the lens device 12 into an electrical signal, a signal processing circuit (not shown) for subjecting the electrical signal of the image of the subject obtained from the imaging device to a predetermined processing to thereby convert the electrical signal into a video signal of a predetermined format, and a camera circuit 14 including a CPU etc. for generally controlling the entirety of the system.

The body 10 includes the view finder 16 (monitor) for displaying a real-time image of a subject being taken now by the imaging device of the body 10. The camera circuit 14 outputs the video signal generated from an image formed by the imaging device to the view finder 16. Focus information etc. described later is also displayed on the view finder 16 so as to be superimposed on the image of a subject, for example. At the time of displaying an image of a subject and an image of the focus information on the view finder 16 in a superimposed manner, a video signal of the superimposed images is generated by the camera circuit 14 of the body 10.

The lens device 12 includes an optical system for imaging a subject image and a control system for controlling the optical system, for example. The optical system includes, as constituent elements disposed within a camera cone thereof as shown in Fig. 1, for example, a movable focus lens group FL for adjusting a focal point (focal point adjustment), a movable zoom lens group ZL for zoom adjustment (focal distance adjustment), and a movable iris I for adjusting brightness. Further, the optical system includes a not-shown fixed lens group.

On the other hand, the control system includes constituent elements for driving and controlling motors FM, ZM, IM respectively coupled to the focus lens group FL, the zoom lens group ZL, the iris I of the optical system. Although the detailed explanation is omitted, the control system includes a lens controlling CPU 20 for generally controlling the entirety of the lens device 12; a digital-to-analog (D/A) converter 22 for converting a control signal, which relates to positions or moving speeds of the focus lens group FL, the zoom lens group ZL, the iris I and is outputted from the lens controlling CPU 20, into an analog signal from a digital signal; amplifiers FA, ZA, IA for driving the respective motors in accordance with the control signal converted into the analog signal by the D/A converter 22; position sensors FP, LP, IP for detecting the current positions of the focus lens group FL, the zoom lens group ZL, the iris I; an analog-to-digital converter 24 for converting output signals from the position sensors FP, LP, IP into digital signals from analog signals; and a ROM 26 for storing program data etc. which is referred by the lens controlling CPU 20, for example. These constituent elements of the control system drive and control the positions or the moving speeds of the focus lens group FL, the zoom lens group ZL, the iris I so as to be target positions or target moving speeds thereof set by the lens controlling CPU 20.

The lens device 12 is coupled to controllers such as a focus demand 30 and a zoom demand 32 via cables etc., for example. The focus demand 30 includes a focus operating member for a manual focus operation. The focus demand 30 outputs a focus instruction signal representing the target position or the target moving speed of focusing (the focus lens group FL) in accordance with the operation of the focus operating member. The instruction signal is converted into a digital signal from an analog signal by the A/D converter 24 and applied to the lens controlling CPU 20.

The zoom demand 32 is provided with a zoom operating member for a manual zoom operation. The zoom demand 32 outputs a zoom instruction signal representing the target position or the target moving speed of zooming (the zoom lens group ZL) in accordance with the operation of the zoom operating member. This instruction signal is converted into a digital signal from an analog signal by the A/D converter 24 and applied to the lens controlling CPU 20.

The lens controlling CPU 20 sets the target positions or the target moving speeds of the focus lens group FL and the zoom lens group ZL in accordance with the instruction signals from the focus demand 30 and the zoom demand 32 to thereby control the focus lens group FL and the zoom lens group ZL so as to be the target positions or the target moving speeds thereof, respectively. The iris I is controlled in accordance with an iris instruction signal supplied from the body 10.

Further, the lens device 12 has an auto-focusing (AF) function for automatically driving the focusing system (the focus lens group FL) of the optical system so that the optical system is placed into a focused state. To this end, the lens device is provided with an AF processing portion 40. The AF processing portion 40 is supplied with a video signal (luminance signal) of an image taken by the imaging device of the body 10 or an image equivalent thereto. The AF processing portion 40 obtains a focal point evaluation value representing the contrast of an image within an AF area at every field image based on the video signal and outputs the focal point evaluation value to the lens controlling CPU 20.

The AF area represents the range of a subject to be focused and is usually set as a square area at the center portion of a screen. The AF area (position or size etc. thereof) can be changed by the focus demand 30 or the predetermined operation member of other controller.

The focal point evaluation value can be obtained in a manner that an image within the AF area is extracted from each of the field images, then the high-frequency component of a video signal within the AF area is extracted by a high-pass filter and the extracted components are added.

Further, the video signal applied to the AF processing portion 40 may be a video signal of a real-time image of a subject which is formed and generated by the imaging device of the body 10 and then taken from the body 10. Alternatively, an imaging device for AF (AF imaging device) may be provided separately from the imaging device of the body 10 (hereinafter called imaging device for video). Then, the AF imaging device may form an image substantially same as that taken by the imaging device for video and may supply a video signal of the image obtained from the AF imaging device to the AF processing portion.

In the case of providing the AF imaging device at the lens device 12, the lens device is configured in the following manner, for example. A light splitting unit such as a half mirror is disposed at the rear stage (the rear stage of the focus lens group FL or the zoom lens group ZL) of the optical system of the lens device 12. Thus, a light from a subject being incident into the imaging device for video of the body 10 is split by the light splitting unit and so a light of the subject for AF is obtained. The image forming plane of the AF imaging device is disposed at a position where a subject image formed on the image forming plane of the AF imaging device becomes substantially same (substantially same in a focus state and a view angle) as a subject image formed on the image forming plane of the imaging device for video. As a result, a video signal of an image substantially same as an image from the imaging device for video can be obtained from the AF imaging device.

On the other hand, in a case where an instruction for performing the auto-focusing (AF) control is applied from the predetermined switch (AF switch) of the focus demand 30 instead of a manual focusing (MF) control using the focus operation member, the lens controlling CPU 20 drives the focus lens group FL based on the focal point evaluation value applied from the AF processing portion 40 to move the focus lens group FL to an in-focus point where the focal point evaluation value becomes maximum. A so-called hill climbing method, for example, is employed as the control method in this case. According to this method, the focus lens group FL is moved reciprocally (wobbling) by a small amount between an infinite point side and a close point side and a focal point evaluation value at each moved point of the focus lens group is obtained from the AF processing portion 40. Then, a direction where the focal point evaluation value increases is detected based on the magnitude relation of the focal point evaluation values at the plural moved points thus obtained. Alternatively, it is detected whether or not the current position is an in-focus point. That is, it is detected as to which one of the front focus, the rear focus and the in-focus is the focus state of the current position. When it is detected that the current position is not in the in-focus point, the focus lens group FL is moved to the in-focus direction, and also the wobbling operation is performed suitably to thereby detect the position where the focus state becomes the in-focus state. Then, the focus lens group FL is stopped at the position where the focus state becomes the in-focus state.

The body 10 and the lens device 12 thus configured are electrically coupled in a manner that the connectors provided at the camera main body and the lens device are directly coupled or coupled via a cable to each other. Thus, various kinds of information can be transmitted between the camera circuit 14 of the body 10 and the lens controlling CPU 20 of the lens device 12.

When the information of the focus state and the information of the AF area (the information is referred as focus information) obtained by the AF function of the lens device 12 as describe above is transmitted to the camera circuit 14 of the body 10 from the lens controlling CPU 20 of the lens device 12, the camera circuit generates a video signal formed by superimposing an image for displaying these information on an image of a subject and outputs the video signal to the view finder 16 and display thereon.

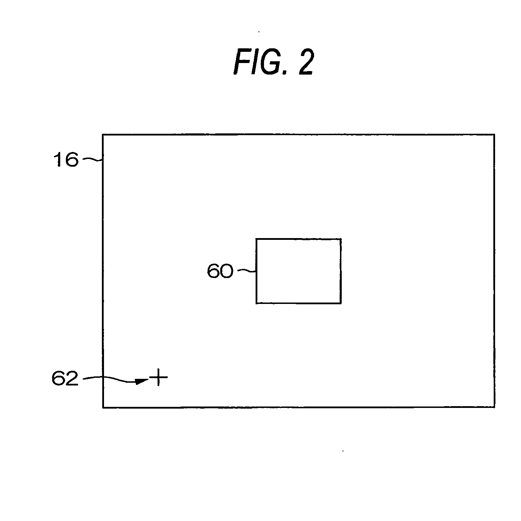

For example, as shown in Fig. 2, an AF frame 60 having a position and a size corresponding to the AF area set by the AF processing portion 40 of the lens device 12 is displayed on the screen of the view finder 16 so as to be superimposed on an image of a subject (not shown). Further, in order to display the current focus state, "+" representing the front focus state, "-"representing the rear focus state or "0" representing the in-focus state is displayed at a focus state display position 62. These focus information may be displayed on the view finder 16 in a different manner from this example.

The lens controlling CPU 20 of the lens device 12 determines whether or not such the focus information is to be displayed on the view finder 16. In this case, if a controller having a view finder (VF) display instruction unit for instructing the on/off of the display of the focus information on the view finder 16 is coupled to the device, a user can determine by using the VF display instruction unit whether or not the focus information is to be displayed. That is, the lens controlling CPU 20 reads the setting state of the VF display instruction unit and perform the determination based on the setting state.

The VF display instruction unit may be provided at the focus demand 30 or the zoom demand 32. Alternatively, the VF display instruction unit may be provided at other arbitrary controller (including a dedicated controller) or may be other controller.

On the other hand, as examples for displaying the focus information on the view finder 16 in the case where the controller having the VF display instruction unit is not coupled to the lens device 12, following first and second examples are considered. According to the first example, when the controller having the VF display instruction unit is not coupled to the lens device 12, it is determined that the lens controlling CPU 20 displays the focus information on the view finder 16 to thereby display the focus information on the view finder 16. The detailed description of this processing will be made later.

According to the second example, the VF display instruction unit (VF display instruction switch) is provided at the lens device 12 or the body 10. When the controller having the VF display instruction unit is not coupled to the lens device 12, the determination as to whether or not the lens controlling CPU 20 displays the focus information on the view finder 16 is made based on the designation of a user using the VF display instruction unit provided at the lens device 12 or the body 10. The detailed description of this processing will be made later.

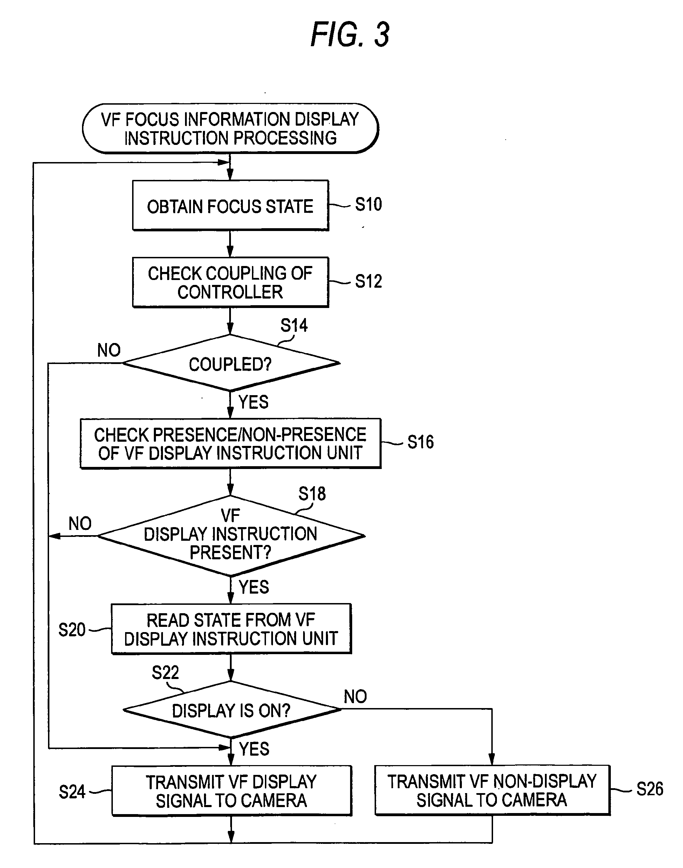

The explanation will be made as to a flowchart shown in Fig. 3 in the case of employing the first example as to the processing (VF focus information display instruction processing) for turning on/off the display of the focus information on the view finder, performed by the lens controlling CPU 20 of the lens device 12.

First, the lens controlling CPU 20 obtains information (focus information) of the focus state and the AF area obtained from the AF function (step S10). Then, it is checked whether or not the controller is coupled to the lens device 12 (step S12) and determined whether or not the controller is coupled to the lens device (step S14). In the case where a plurality of the controllers are coupled to the lens device 12, it is determined to be Yes when at least one controller is coupled.

When it is determined Yes in step S 14, then it is checked whether or not the controller has the VF display instruction unit (step S16) and determined whether or not the controller has the VF display instruction unit (step S 18). In the case where a plurality of the controllers are coupled to the lens device 12, it is determined to be Yes in step S 18 when at least one of the controllers has the VF display instruction unit. In contrast, when none of the controllers have the VF display instruction unit, it is determined to be No in step S 18.

When it is determined Yes in step S 18, the setting state of the VF display instruction unit (VF display instruction switch) of the controller is read (step S20) and it is determined whether or not the focus information is set to be displayed on the view finder (step S22).

When it is determined Yes in step S22, the focus information is transmitted to the camera circuit 14 of the body 10 and a command instructing the display of the focus information on the view finder 16 is transmitted (step S24). Thus, according to the processing within the body 10, the focus information (an image for displaying the focus information) is superimposed on an image of a subject and the superimposed image is displayed on the view finder 16.

In contrast, when it is determined No in step S22, a command instructing not to display the focus information on the view finder 16 is transmitted (step S26). In this case, the focus information may not be transmitted to the camera circuit 14 of the body 10 so as not to display the focus information on the view finder 16.

When the processing of step S24 or S26 is completed, the processing returns to step S10.

On the other hand, when it is determined No in step S 14, that is, when it is determined that no controller is coupled or when it is determined No in step S 18, that is, when it is determined that the controller does not has the VF display instruction unit, the processing proceeds to step S24. Thus, the focus information is transmitted to the camera circuit 14 of the body 10 and also a command for instructing the display of the focus information on the view finder is transmitted (step S24). As a result, according to the processing within the body 10, the focus information (an image for displaying the focus information) is superimposed on an image of a subject and the superimposed image is displayed on the view finder 16.

According to the first example, in the case where the controller having the VF display instruction unit is not coupled to the lens device 12, the focus information is automatically displayed on the view finder 16.

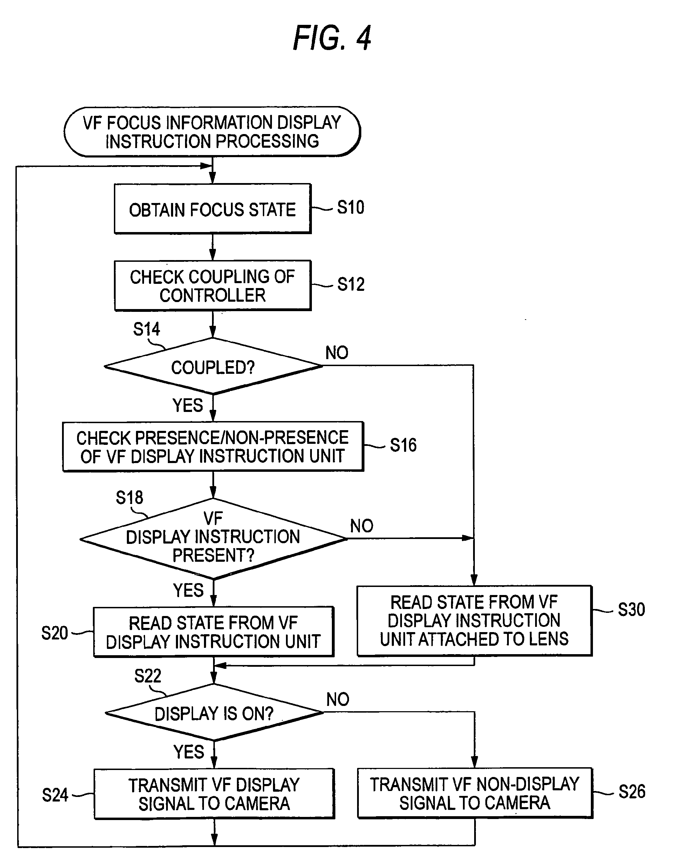

The explanation will be made as to a flowchart shown in Fig. 4 in the case of employing the second example as to the processing (VF focus information display instruction processing) for turning on/off the display of the focus information on the view finder, performed by the lens controlling CPU 20 of the lens device 12. In the figures, processing blocks identical or similar to those of Fig. 3 are referred to by the common symbols, and explanation will be made mainly as to processings different from Fig. 3.

In the second example, it is supposed that the lens device 12 is provide with the VF display instruction unit (a VF display instruction switch 50 in Fig. 1). When it is determined No in step S14, that is, when it is determined that no controller is coupled or when it is determined No in step S 18, that is, when it is determined that the controller does not has the VF display instruction unit, the setting state of the VF display instruction unit (VF display instruction switch 50) provided at the lens device 12 is read (step S30). Then, unlike the first example, the processing proceeds to step S22, whereat it is determined whether or no the VF display instruction unit (VF display instruction switch 50) provided at the lens device 12 is in a setting state for turning on the display of the focus information on the view finder (step S22).

When it is determined Yes in step S22, the focus information is transmitted to the camera circuit 14 of the camera main body 10 and a command instructing the display of the focus information on the view finder 16 is transmitted (step S24). Thus, according to the processing within the camera main body 10, the focus information (an image for displaying the focus information) is superimposed on an image of a subject and the superimposed image is displayed on the view finder 16.

In contrast, when it is determined No in step S22, a command instructing not to display the focus information on the view finder is transmitted (step S26).

According to the second example, in the case where the controller having the VF display instruction unit is coupled to the lens device 12, it is determined whether or not the focus information is to be displayed on the view finder according to the VF display instruction unit of the controller. In contrast, in the case where the controller having the VF display instruction unit is not coupled to the lens device 12, that is, when the controller is not coupled to the lens device 12 or the controller coupled to the camera device does not have the VF display instruction unit, it is determined whether or not the focus information is to be displayed on the view finder 16 according to the VF display instruction unit provided at the lens device 12.

According to the second example, it is possible to provide the VF display instruction unit (a VF display instruction switch 52 in Fig. 1) at the camera main body 10 instead of providing the VF display instruction unit at the lens device 12. In this case, in step S30 of the aforesaid flowchart, the setting state of the VF display instruction unit (VF display instruction switch 52) of the camera main body 10 may be read instead of reading the setting state of the VF display instruction unit of the lens device 12

As described above, according to the examples, the invention can be applied to any type of the AF function mounted on the lens device 12. For example, the invention can be applied to the AF function such as the optical path length difference AF system or the phase difference AF system. For example, according to the optical path length difference AF system, in the lens device 12, a light splitting unit is disposed at the optical system for imaging a subject on the imaging device of the camera main body 10 to thereby split a light from the subject for AF. Then, a plurality of the AF imaging devices having an optical path length difference therebetween are disposed near a position where a subject image substantially same (substantially same in a focus state and a view angle) as a subject image formed on the image forming plane of the imaging device of the camera main body 10 is formed by the light from the subject for AF. The focus state is detected by comparing the contrasts of the subject images formed by the AF imaging devices, and the focus state of the optical system is controlled so as to be an in-focus state based on the detected focus state.

## Claims

1. A television camera system comprising:
a television camera main body that includes an imaging device which converts a subject image formed on an image forming plane into an electric signal;
a lens device that includes an optical system which forms the subject image on the image forming plane and that has an auto-focusing function for automatically adjusting a focal point of the optical system; and
a monitor that displays an image signal outputted from the television camera main body,
wherein focus information obtained by the auto-focusing function of the lens device can be displayed on the monitor via the television camera main body, and
wherein
in a case where a controller including a display instruction unit that instructs whether the focus information is to be displayed on the monitor is coupled to the lens device, the lens device determines whether the focus information is to be displayed on the monitor in accordance with an instruction from the display instruction unit, and
in a case where the controller is not coupled to the lens device, the lens device determines that the focus information is to be displayed on the monitor.

2. A television camera system comprising:
a television camera main body that includes an imaging device which converts a subject image formed on an image forming plane into an electric signal;
a lens device that includes an optical system which forms the subject image on the image forming plane and that has an auto-focusing function for automatically adjusting a focal point of the optical system; and
a monitor that displays an image signal outputted from the television camera main body,
wherein focus information obtained by the auto-focusing function of the lens device can be displayed on the monitor via the television camera main body,
wherein one of the lens device and the television camera main body includes a first display instruction unit that instructs whether the focus information is to be displayed on the monitor, and
wherein
in a case where a controller including a second display instruction unit that instructs whether the focus information is to be displayed on the monitor is coupled to the lens device, the lens device determines whether the focus information is to be displayed on the monitor in accordance with an instruction from the second display instruction unit, and
in a case where the controller is not coupled to the lens device, it is determined whether the focus information is to be displayed on the monitor according to an instruction from the first display instruction unit.

3. A television camera system according to claim 1, wherein the focus information includes at least one of information representing focus information of the optical system and information of an auto-focus area representing an area of a subject on which the auto-focusing function is focused.

4. A television camera system according to claim 2, wherein the focus information includes at least one of information representing focus information of the optical system and information of an auto-focus area representing an area of a subject on which the auto-focusing function is focused.
